Europäisches Patentamt

European Patent Office

Office européen des brevets

(11) Publication number: **0 688 969 A1**

# EUROPEAN PATENT APPLICATION
## published in accordance with Art. 158(3) EPC

(21) Application number: 95905766.2

(22) Date of filing: **12.01.95**

(86) International application number:
**PCT/JP95/00029**

(87) International publication number:
**WO 95/19508 (20.07.95 95/31)**

(51) Int. Cl.6: **F16D 65/10**

(30) Priority: **12.01.94 JP 25846/94**

(43) Date of publication of application:
**27.12.95 Bulletin 95/52**

(84) Designated Contracting States:
**DE FR GB**

(71) Applicant: **TOKYO-BUHIN KOGYO CO., LTD.**
**6-1, Tsukimino 1-chome, Yamato-shi**
**Kanagawa 242 (JP)**

(72) Inventor: **MATSUI, Norio**
**+di**
**(JP)**
Inventor: **OKADA, Norihisa**
**6-1, Tsukimino 1-chome**
**Yamato-shi**
**Kanagawa 242 (JP)**
Inventor: **AOKI, Akira**
**6-1, Tsukimino 1-chome**
**Yamato-shi**
**Kanagawa 242 (JP)**

(74) Representative: **Wolff, Francis Paul**
**Wolff & Lunt**
**1 Richfield Place**
**Richfield Avenue**
**Reading**
**Berkshire RG1 8EO (GB)**

(54) **DAMPING STRUCTURE-CARRYING BRAKE DRUM AND DRUM BRAKE PROVIDED WITH THE SAME BRAKE DRUM**

(57) A brake drum is formed by a cylindrical member (111, 211, 311) having an inner circumferential surface against which a brake lining (4) is pressed, an annular pressure receiving portion (112, 212, 312) formed on an outer circumference of the cylindrical member, a damping member (30, 40, 70, 80) provided in contact with the pressure receiving portion, and a tightening bolt for pressing the damping member against the pressure receiving portion. When the drum is vibrated due to the friction between the lining and the inner circumferential surface of the drum during the application of the brake, a relative slip occurs between the pressure receiving portion and a contact surface (opposed surface) of the damping member in accordance with the deformation of the drum which causes this vibration to occur. Since a frictional resistance between the contact surfaces works on this relative slip, the vibration of the drum is damped quickly, and a searching of the brake is minimized.

FIG.1

## TECHNICAL FIELD

The present invention relates to a drum brake, and more specifically to a drum brake capable of preventing the brakes from squealing upon applying the brakes.

## TECHNICAL BACKGROUND

In vehicles each including a drum brake, the brakes frequently produce a squealing sound, etc., upon the application of the brakes, which are felt uncomfortable by a driver. The squealing of a brake originates from resonance of a brake drum and components of the brake, the resonance being caused upon braking of a vehicle by frictional force between a lining provided on a brake shoe and an inner diameter surface of the brake drum being pressed against the lining.

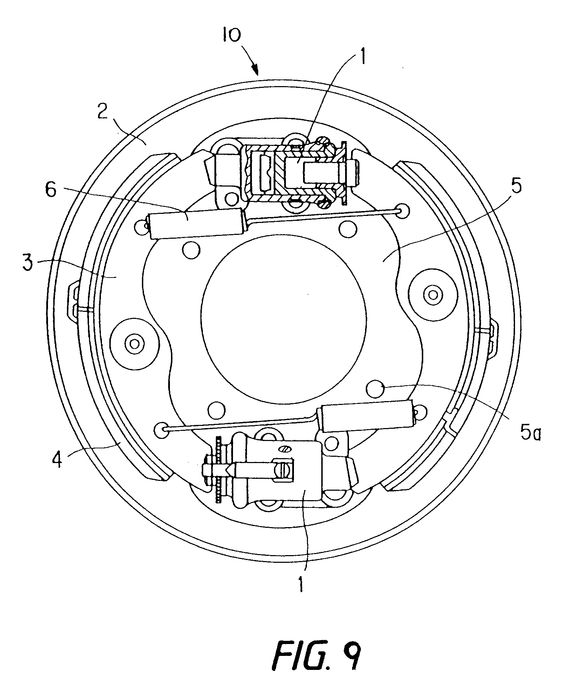

FIG.8 illustrates in a sectional view a conventional brake drum 20 for use in vehicles. The brake drum 20 is formed into a bottomed cylinder and includes a reinforcing ring-shaped protrusion 22 integrally provided thereon in the vicinity of an opening of an outer circumference 21 with a bottom 25 which forms a mounting surface.

FIG.9 illustrates in a front view of a brake 10 for use in a combination with the brake drum shown in Fig.8. The brake 10 comprises a wheel cylinder 1, a cover 2, a brake shoe 3, a lining 4 mounted on the shoe 3, and a return spring 6, and is attached to a vehicle body using bolts, etc., through mounting holes 5a formed in a mounting surface 5.

Upon braking of a vehicle liquid pressure in the wheel cylinder 1 is raised to widen the brake shoe 3 whereby the lining 4 is pressed against an inner diameter 21a of the brake drum 20 while upon releasing the braking the brake shoe 3 is returned to an original position with the aid of the wheel cylinder 1 and the return spring 6.

In the drum brake constructed as such the lining 4 is pressed against the inner diameter 21a of the brake drum 20 upon the braking of a vehicle whereby frictional force is produced between the inner diameter surface of the brake drum 20 and the lining 4 to brake the vehicle. Thereupon, the frictional force causes the brake drum 20 and components of the brake 10 to vibrate and the brake to produce a squealing sound, etc. The squealing of the brake is caused mainly owing to resonance between the brake drum 20 and the components of the brake 10.

Accordingly, for preventing the squealing of the brake it is necessary to provide a vibration damping structure on the brake drum 20 and the components of the brake 10. There is known as an appraisal method of the vibration damping effect by the vibration damping member a loss factor Y which is represented by the rate of energy lost per one period of vibration. For example, there is expressed by the following formula the loss factor Y when vibration N1 with an amplitude $X_0$ is damped to an amplitude $X_n$ during n times of the vibration as illustrated in FIG.7:

$$Y = \{ 1/(n \cdot \pi) \} \log( X_0 / X_n ).$$

This indicates higher vibration damping performance as the loss factor Y becomes greater.

Accordingly, measured the loss factor Y for brake drums, vibration damping performance of any brake drum, i.e., ease of the squealing of the brake drum can be known.

It is found that as a result of several measurements concerning the conventional brake drum 20 configured as illustrated in FIG.8 the loss factor Y ranges from $0.5 \times 10^{-3}$ to $1.0 \times 10^{-3}$.

In view of the drawbacks with the prior art it is an object of the present invention to inhibit the brake drum 20 from squealing and so on owing to the brake drum 20 although the squealing of the brake originates from both of the brake drum 20 and the brake 10, and more particularly to inhibit such squealing with damping vibration by improving vibration damping performance of the brake drum.

## DISCLOSURE OF THE INVENTION

To achieve the above object, a brake drum according to the present invention comprises a cylindrical portion having an inner circumferential surface against which a brake lining is pressed, a vibration damping member disposed in contact with a pressure reception portion, and press means for pressing said vibration damping member against said pressure reception portion.

Said pressure reception portion may be constructed with a ring-shaped protrusion with a wedge-shaped cross section formed on the outer circumference of the cylindrical portion, and said vibration damping member may be constructed with a pair of left and right ring-shaped semicircular half structures, and further a ring-shaped recess with a wedge-shaped cross section may be formed in the inner circumference of each semicircular half structure. Said ring-shaped semicircular half structure is mounted on the cylindrical portion outer circumference such that it covers said ring-shaped protrusion and said ring-shaped protrusion is fitted in said ring-shaped recess.

Said pressure reception portion may be constructed with a ring-shaped protrusion with a wedge-shaped cross section formed on the ring-shaped protrusion on the cylindrical portion outer circumference, and said vibration damping member may be composed of a pair of left and right ring-shaped semicircular half structures, and further a ring-shaped protrusion with a wedge-shaped cross section may be composed of on the inner circumference of each semicircular half structure. Said ring-shaped semicircular half structure is mounted on the cylindrical portion outer circumference such that it covers said ring-shaped recess and said ring-shaped protrusion is fitted in said ring-shaped recess.

Said pressure reception portion may be constructed with a ring-shaped protrusion formed on the outer circumference of the cylindrical portion, and said vibration damping member may be constructed with first and second cylindrical vibration damping members which hold said ring-shaped protrusion from the left and right.

A brake according to the present invention comprises a brake drum composed of a cylindrical portion having an inner circumferential surface against which a lining is pressed, a pressure reception portion formed on the outer circumference of the cylindrical portion, a vibration damping member disposed in contact with the pressure reception portion, and press means for pressing the vibration damping member against the pressure reception portion, and further comprises a brake shoe including a lining disposed in opposition to the inner circumferential surface against which the lining is pressed, and a wheel cylinder for expanding the brake shoe to press the lining against the inner circumferential surface against which the lining is pressed.

In accordance with the present invention, the outer circumference of the brake drum and the vibration damping member have opposed surfaces which are brought into contact by being pressed towards each other and these opposed surfaces make contact with each other with predetermined surface pressure so that once any vibration is caused upon braking, relative slip is produced between the opposed contact surfaces in response to deformation of the brake drum corresponding to the vibration. Vibration energy is absorbed by frictional resistance against the relative slip so that the vibration of the brake drum is restricted to prevent the brake drum from squealing.

It is herein noticed that provided strong damping force is exerted, no relative slip would be produced because of excessively greater surface pressure between the opposite surfaces, so that it is preferable to apply a lubricant on the opposite surfaces for reducing a frictional coefficient therebetween whereby the relative slip is facilitated to be produced for increased absorption of the vibration energy.

## BRIEF DESCRIPTION OF THE DRAWINGS

FIG. 1 is a sectional view illustrating a brake drum associated with an embodiment of the present invention;

FIG. 2 is a sectional view and a front view both illustrating a vibration damping member surrounding the brake drum;

FIG. 3 is a sectional view illustrating a brake drum associated with a second embodiment of the present invention;

FIG. 4 is a sectional view and a side view both illustrating a vibration damping member surrounding the brake drum;

FIG. 5 is a partial sectional view illustrating a brake drum associated with a third embodiment of the present invention;

FIG. 6 is a sectional view illustrating a vibration damping member surrounding the brake drum of FIG. 5;

FIG. 7 is a graphical representation illustrating exemplary vibration of a brake drum;

FIG. 8 is a sectional view illustrating a conventional brake drum; and

FIG. 9 is a frontal view illustrating a brake device.

## EMBODIMENT

In what follows, embodiments of the present invention will be described with reference to the accompanying drawings.

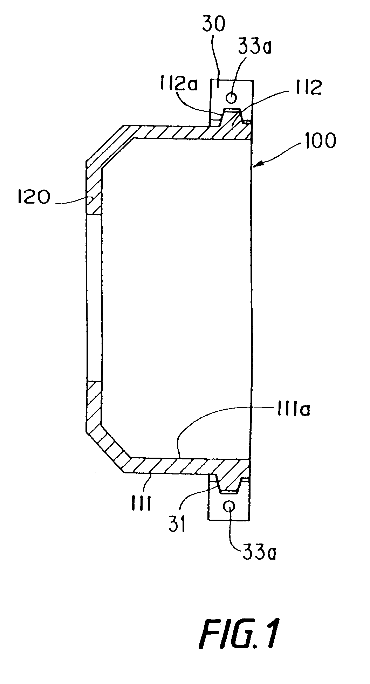

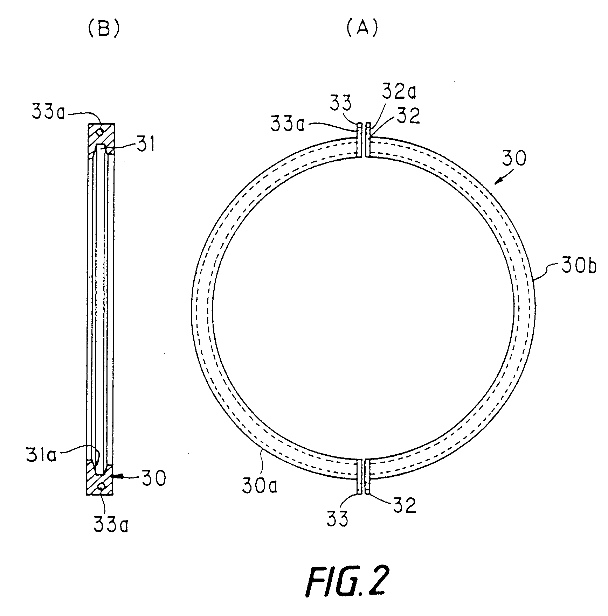

FIG. 1 is a sectional view illustrating a brake drum 100 associated with a first embodiment of the present invention, and FIG. 2 illustrates a divided vibration damping member 30. The brake drum 100 is mounted on a wheel, while a lining 4 of a brake 10 illustrated in FIG. 9 is allowed to enter the brake drum 100 in opposition to an inner circumferential surface 111a of the brake drum 100 and is fixedly mounted on a vehicle body. Since the structure of the brake 10 is identical to that of the prior art and is constructed as illustrated in FIG.9, the description will be omitted.

The brake drum 100 is formed into a bottomed cylinder using cast iron, cast steel, and steel, etc., which comprises a cylindrical portion 111 that forms the inner circumferential surface 111a against which the lining 4 is pressed upon braking, and a bottom surface 120 that serves as a mounting surface onto wheels. A protrusion 112 with a wedge-shaped cross section is formed on the outer circumference of the cylinder 111 which is configured into a ring shape and is narrowed as it goes to the outer circumference, and the protrusion 112 constitutes a pressure reception portion.

The vibration damping member 30 is made of steel, etc., and comprises a pair of left and right ring-shaped semicircular structures 30a, 30b, each structure being yielded by halving the vibration damping member, and mounting flanges 32, 33 are provided on opposite ends of each semicircular structure. A recess 31 with a wedge-shaped cross section is formed in the inner circumference of each vibration damping member 30, which recess is widened in its width as it goes toward the inner circumference side.

The vibration damping member 30 is mounted on the outer circumference of the brake drum 100 such that the recess 31 with a wedge-shaped cross section covers the protrusion 112 with a wedge-shaped cross section, and left and right vibration damping members are clamped with clamp bolts ( not shown ) by inserting the clamp bolts into bolt holes 32a, 33a formed through the mounting flanges 32, 33. Hereby, a wedge-shaped surface 112a of the protrusion 112 and an opposed wedge-shaped surface 31a of the recess 31 are brought into contact with each other, surface pressure thereupon being provided by the bolt clamping. Greater surface pressure is produced on both contact surfaces owing to wedge effect.

Operation of the brake drum constructed as above upon braking will be described. Upon a vehicle being braked, the brake shoe 3 is expanded with a wheel cylinder 1 to press the lining 4 against the inner circumferential surface 111a of the brake drum 100. At this time, frictional force between the brake drum 100 and the lining 4 causes vibration to be produced on the brake drum 100 and the components of the brake 10. The vibration originates from the deformation of the brake drum 100, and owing to such deformation relative slip is produced between the wedge-shaped contact surface 112a of the protrusion 112 and the wedge-shaped contact surface 31a of the recess 31. Both opposed contact surfaces 112a, 31a make contact with each other having predetermined surface pressure, and frictional resistance corresponding to the surface pressure is applied to the relative slip so that vibration energy is absorbed by the frictional force and hence the vibration is rapidly damped. The brake is thus inhibited from squealing upon braking.

There is a possibility with greater damping force applied on the brake that the deformation of the brake drum 100 is increased and the foregoing surface pressure is excessive owing to the wedge action caused by the deformation to prevent the relative slip from being produced and results in less damping of the vibration. To solve the difficulty, it is preferable to interpose a lubricant comprising microfine powdered particles such as graphite, molybdenum disulfide, talcum powder, etc., between the foregoing opposed contact surfaces ( the wedge-shaped contact surface 112a of the protrusion 112 and the wedge-shaped contact surface 31a of the recess 31 ). Hereby, the relative slip is more facilitated to be produced for more increased absorption of the vibration energy.

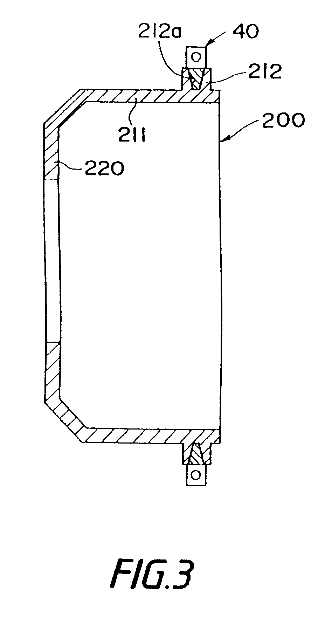

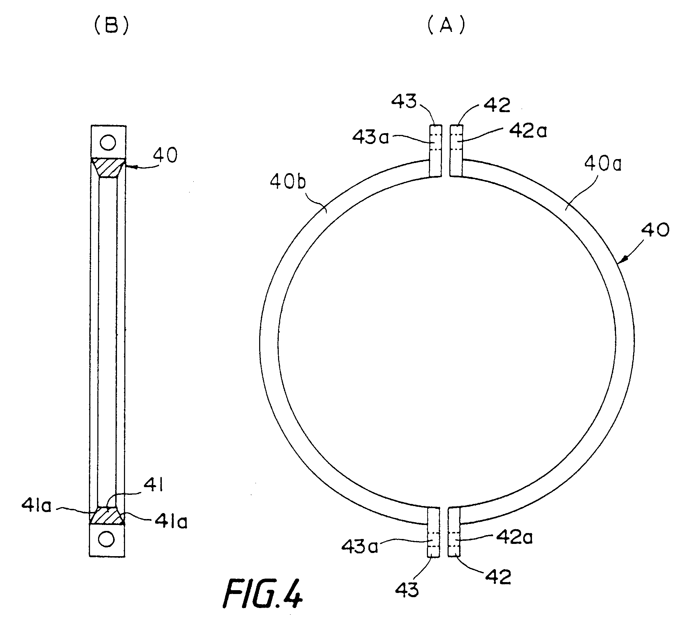

FIG. 3 illustrates a cross section of a brake drum 200 associated with a second embodiment of the present invention, and FIG. 4 illustrates a vibration damping member 40 of half structures. The brake drum 200 comprises a cylindrical portion 211 and a bottom surface 220, and a ring-shaped protrusion is provided on an outer circumference of the cylindrical portion 211 and a recess 212 with a wedge-shaped cross section is formed on an outer circumferential surface of the protrusion, the recess being widened in its width as it goes toward an outer circumference side. In the present embodiment the recess 212 constitutes a pressure reception portion. In contrast, the vibration damping member 40 comprises a pair of left and right ring-shaped semicircular half strucures 40a, 40b, and mounting flanges 42, 43 are provided on opposite ends of each semicircular half structure. A protrusion 41 with a wedge-shaped cross section is formed on an inner circumferential surface of each half vibration damping member 40, the protrusion being narrowed in its width as it goes the inner circumference side.

The vibration damping member 40 is mounted on the outer circumference of the brake drum 200 such that the protrusion 41 enters the recess 212, and the left and right vibration damping members are clamped with clamp bolts ( not shown ) by inserting the clamp bolts into bolt holes 32a, 33a formed through the mounting flanges 32, 33. Hereby, the surface 212a of the recess 212 and the opposite surface 41a of the protrusion 41 make contact with each other at predetermined surface pressure.

Also in the case where the brake constructed as above is employed, vibration produced on the brake drum 200 and the brake 10 upon damping causes relative slip between both contact surfaces 212a and 41a of the recess 212 of the wedge-shaped cross section of the brake drum 200 and of the protrusion 41 of the vibration damping member 40, and vibration energy is absorbed by frictional resistance against the relative slip and hence the vibration is rapidly damped for restriction of squealing of the brake. Also in this embodiment, it is preferable to interpose a lubricant between both opposite surfaces.

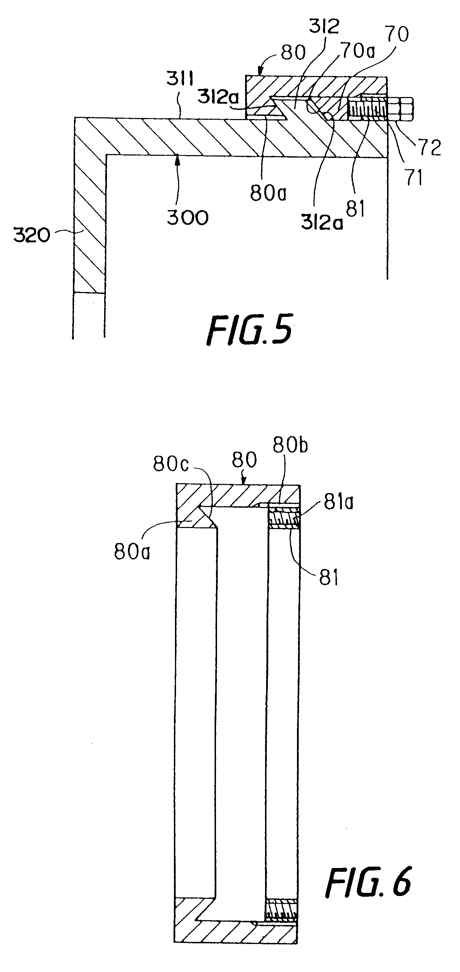

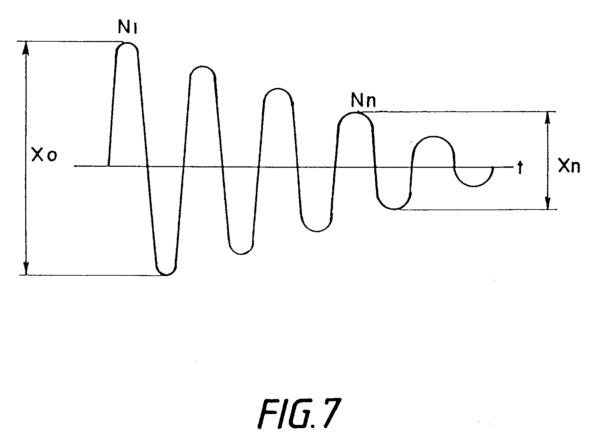

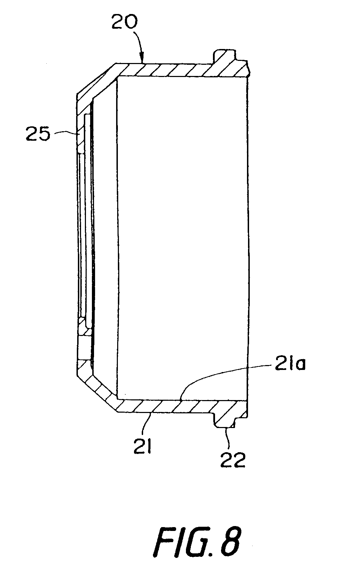

FIG. 5 illustrates a cross section of a brake drum 300 associated with a third embodiment of the present invention, and FIG. 6 illustrates a first vibration damping member 80 surrounding the brake drum 300. The brake drum 300 comprises a cylindrical portion 311 and a bottom 320, and a ring-shaped protrusion 312 with a parallelogram-shaped cross section is formed on an outer circumference of the cylindrical portion 311. The protrusion 312 constitutes a pressure reception portion.

The vibration damping member comprises a first cylindrical vibration damping member 80 illustrated in FIG. 6 and a second ring-shaped vibration damping member 70. The first vibration damping member 80 is formed into a shape having a cylindrical space which has a slightly larger internal diameter than an external configuration of the protrusion 312, leaving a flange-shaped pressure reception portion 80a having an opposite surface on one side thereof, and a female screw 80b is formed in an internal surface of an inlet portion of the cylindrical space. A ring-shaped retainer 81 having a male screw is screwed into the female screw 80b to enter the cylindrical space and is fixed. As a result, the flange-shaped pressure reception portion 80a is connected with the ring-shaped retainer 81 through a cylindrical portion of the first vibration damping member 80. As shown in FIG.6, the cylindrical portion covers the cylindrical space between the flange-shaped pressure reception portion 80a and the ring-shaped retainer 81. A plurality of bolt tapped holes 81a are formed in the retainer 81, in each of which holes a female screw is formed at an equal interval on the circumferential of the retainer.

The second vibration damping member 70 is a ring-shaped member having a contact surface 70a on one side thereof. After the first vibration damping member 80 is mounted on an outer circumference of the brake drum 300 such that the contact surface 80c opposes the contact surface 312a, the second vibration damping member 70 is inserted into the cylindrical space of the first vibration damping member 80. At this time, the contact surface 70a of the second vibration damping member 70 opposes the contact surface 312a of the protrusion 312.

Thereafter, the retainer 81 is screwed into the first vibration damping member 80 and a clamp bolt 71 is screwed into the bolt tapped hole 81a. Hereby, the clamp bolt 71 protrudes into the cylindrical space to make contact with the side of the retainer 81, and the protrusion 312 is held from both left and right sides thereof with the first vibration damping member 80 and the second vibration damping member 70 by clamping the bolt 71. Hereby, the contact surface 80c of the first vibration damping member 80 and the contact surface 70a of the second vibration damping member are brought into contact with the left and right contact surfaces 312a of the protrusion 312, respectively. Contact surface pressure at this time is determined by clamping force of the clamp bolt 71, and the surface pressure is increased owing to wedge action because of the opposed surfaces' being slantingly oriented to each other.

Also in the case where the brake constructed as such is employed, vibration produced between the brake drum 300 and the brake 10 upon braking causes relative slip between the contact surfaces 312a of the protrusion 312 of the brake drum 300 and the contact surfaces 80c, 70a of the first and second vibration damping members 80, 70, and vibration energy is absorbed by frictional resistance against the relative slip and hence the vibration is rapidly damped for restriction of squealing of the brake. Also in this case, it is preferable to interpose a lubricant between both opposite contact surfaces.

On measuring the loss factor Y using the brake drums associated with the first through third embodiments, Y without a lubricant ranges from $2 \times 10^{-3}$ to $11 \times 10^{-3}$, while Y with a lubricant ranges from $5 \times 10^{-3}$ to $12 \times 10^{-3}$. In view of a loss factor of the conventional brake drum ranging from $0.5 \times 10^{-3}$ to $1.0 \times 10^{-3}$, it is clear that the vibration damping effect of the present invention is much greater. Thus, use of the brake drum of the present invention ensures sharp restriction of squealing of the brake upon braking of the vehicle.

## Claims

1. A brake drum including a vibration damping structure, the drum comprising:
   a cylindrical portion having an inner circumferential surface against which a brake lining is pressed;
   a pressure reception portion formed on the outer circumference of said cylindrical portion;
   a vibration damping member disposed in contact with said pressure reception portion; and
   press means for pressing said vibration damping structure against said pressure reception portion.

2. A brake drum according to claim 1 wherein said pressure reception portion is a ring-shaped protrusion with a wedge-shaped cross section which is formed on the outer circumference of said cylindrical portion into a ring shape and is narrowed in its width as it goes toward the outer circumference side thereof;
   said vibration damping member is composed of a pair of left and right ring-shaped semicircular half structures and includes a ring-shaped recess with a wedge-shaped cross section formed in the inner circumference of each semicircular half structure which is widened in its width as it goes toward the inner circumference side thereof; and
   said ring-shaped semicircular half structure is mounted on the outer circumference of said cylindrical portion such that it covers said ring-shaped protrusion and said ring-shaped protrusion is fitted into said ring-shaped recess.

3. A brake drum according to claim 1 wherein said pressure reception portion is a ring-shaped recess with a wedge-shaped cross section formed in the outer circumferential surface of the ring-shaped protrusion provided on the outer circumference of said cylindrical portion and widened in its width as it goes toward the outer circumference side;

said vibration damping member is composed of a pair of left and right ring-shaped semicircular half structures and includes a ring-shaped protrusion with a wedge-shaped cross section which is formed in the inner circumference of each semicircular half structure and which is widened in its width as it goes toward the inner circumference side thereof;

said ring-shaped semicircular half structure is mounted on the outer circumference of said ring-shaped recess and said ring-shaped protrusion is fitted in said ring-shaped recess.

4. A brake drum according to claim 2 or 3 wherein mounting flanges are provided on opposite ends of said ring-shaped semicircular half structure and wherein in the state of said ring-shaped semicircular half structure mounted on the outer circumference of said cylindrical portion said ring-shaped semicircular half structure is clamped between the opposite mounting flanges through clamp bolts, and wherein said left and right ring-shaped semicircular half structures are approached to exert predetermined surface pressure on said ring-shaped protrusion and said ring-shaped recess for contact therebetween.

5. A brake drum according to claim 1 wherein said pressure reception portion is a ring-shaped protrusion formed on the outer circumference of said cylindrical portion, and said vibration damping member is composed of first and second cylindrical vibration damping members for holding said ring-shaped protrusion from the left and right sides of the same.

6. A brake drum according to claim 5 wherein said first vibration damping member is composed of a flange-shaped pressure reception portion which makes contact with one side surface of said ring-shaped protrusion and a cylindrical bridge portion integrally connected with the ring-shaped protrusion and mounted on the outer circumference of said cylindrical portion so as to cover said ring-shaped protrusion, and

wherein said second vibration damping member is a ring-shaped member which is disposed in the bridge portion to make contact with the opposite side surface of said ring-shaped protrusion.

7. A brake drum according to claim 6 wherein a retainer is arranged in the end inner surface of said cylindrical bridge portion, screwed thereinto, and said second vibration damping member is pressed against said ring-shaped protrusion with a clamp bolt which is screwed in a female screw hole formed in the retainer to be protruded inwardly of the side of the retainer, and hereby said ring-shaped protrusion portion is held by said flange-shaped pressure reception portion and said second vibration damping member.

8. A brake drum according to any of claims 1 to 7 wherein a lubricant is interposed between contact surfaces of said pressure reception portion and said vibration damping member.

9. A brake drum according to claim 8 wherein said lubricant comprises microfine powdered particles of any of graphite, molybdenum disulfide, and talcum powder or micro-fine powdered particles yielded by mixing them.

10. A drum brake comprising:

a brake drum composed of a cylindrical portion having an inner circumferential surface against which a brake lining is pressed, a pressure reception portion formed on an outer circumference of said cylindrical portion, a vibration damping member disposed in contact with said pressure reception portion, and press means for pressing said vibration damping member against said pressure reception portion;

a brake shoe including the lining disposed in opposition to said inner circumferential surface; and

a wheel cylinder for expanding the brake shoe and pressing said lining against said lining pressing inner circumferential surface.

**FIG.1**

(B)

(A)

*FIG.2*

**FIG.3**

(B)                                    (A)

FIG.4

EP 0 688 969 A1

EP 0 688 969 A1

FIG.5

FIG.6

12

FIG.7

FIG.8

**FIG. 9**

15

## INTERNATIONAL SEARCH REPORT

International application No.

PCT/JP95/00029

### A. CLASSIFICATION OF SUBJECT MATTER

Int. Cl$^6$  F16D65/10

According to International Patent Classification (IPC) or to both national classification and IPC

### B. FIELDS SEARCHED

Minimum documentation searched (classification system followed by classification symbols)

Int. Cl$^6$  F16D65/10, F16D65/12

Documentation searched other than minimum documentation to the extent that such documents are included in the fields searched

| | |
|---|---|
| Jitsuyo Shinan Koho | 1926 - 1995 |
| Kokai Jitsuyo Shinan Koho | 1971 - 1995 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP, U, 62-176530 (Suzuki Motor Corp.), November 10, 1987 (10. 11. 87), Lines 2 to 5, left column, page 1 (Family: none) | 1-3 |
| Y | JP, U, 62-92331 (Suzuki Motor Corp.), June 12, 1987 (12. 06. 87), Lines 2 to 7, left column, page 1 (Family: none) | 1-3 |
| Y | JP, U, 61-67432 (Suzuki Motor Corp.), May 9, 1986 (09. 05. 85), Lines 2 to 5, left column, page 1 (Family: none) | 1-3 |
| Y | JP, U, 59-141236 (Sumitomo Electric Industries, Ltd.), September 20, 1984 (20. 09. 84), Fig. 1 (Family: none) | 1, 2 |

☒ Further documents are listed in the continuation of Box C.   ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| March 1, 1995 (01. 03. 95) | March 20, 1995 (20. 03. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP95/00029

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP, A, 56-164236 (Sumitomo Electric Industries, Ltd.), December 17, 1981 (17. 12. 81), Line 3, upper right column to line 3, lower left column, page 2 (Family: none) | 1, 2 |
| Y | JP, U, 54-161488 (Sunster Kinzoku K.K.), November 12, 1979 (12. 11. 79), Figs. 2 to 4 | 1-3 |

Form PCT/ISA/210 (continuation of second sheet) (July 1992)